# EUROPEAN PATENT SPECIFICATION

(11) **EP 4 219 193 B1**
(45) Date of publication and mention of the grant of the patent: **12.02.2025**
(21) Application number: 22207959.2
(22) Date of filing: 17.11.2022
(51) Int. Cl.: B60C 11/00, B60C 11/24, B60C 11/12, B60C 11/03, B60C 11/13

(54) **METHOD OF USING A TYRE**
VERFAHREN ZUR VERWENDUNG EINES REIFENS
PROCÉDÉ D'UTILISATION D'UN PNEUMATIQUE

(30) Priority: 31.01.2022 JP 2022013282
(43) Date of publication of application: 02.08.2023
(73) Proprietor: Sumitomo Rubber Industries, Ltd., Kobe-shi, Hyogo 651-0072 (JP)
(72) Inventor: KOKI, NAGASAWA, Kobe-shi, Hyogo, 651-0072 (JP)
(74) Representative: Manitz Finsterwald Patent- und Rechtsanwaltspartnerschaft mbB

(56) References cited:
- EP-A1- 2 108 527
- WO-A1-2015/038641
- WO-A1-2019/066837
- WO-A1-2021/229160
- DE-A1- 19 731 525
- US-A1- 2013 333 458
- US-A1- 2020 346 496
- US-S- D 886 728

## Description

### RELATED APPLICATIONS

This application claims the benefit of foreign priority to Japanese Patent Application No. JP2022-013282, filed January 31, 2022.

### FIELD OF THE INVENTION

The present invention relates to a method of using a tire.

### BACKGROUND OF THE INVENTION

Patent Document 1 below has proposed a pneumatic tyre that is expected to have low rolling resistance and better wet braking performance by specifying the loss tangent of a first cap layer and a second cap layer of the tread.

### PATENT DOCUMENT

### [PATENT DOCUMENT 1]

### Japanese Unexamined Patent Application Publication 2018-002008

A method of using a tyre having the features of the preamble of claim 1 is known from EP 2 108 527 Al. Related aspects are described in WO 2021/229160 A1, DE 197 31 525 A1 and US 2020/346496 Al.

### SUMMARY OF THE INVENTION

In general, as tread wear progresses, the volume of the grooves on the tread decreases, resulting in a gradual decrease in wet performance. In particular, the tyre of Patent Document 1 tends to further deteriorate wet performance when the second cap layer appears on the ground contact surface.

The smaller the reduction in wet performance due to tread wear, the more desirable it is. It is also desirable that tread wear can be confirmed immediately when the tyre is observed.

The present invention has been made in view of the above circumstances and has a major object to provide a method of using a tyre capable of suppressing the deterioration of wet performance, in particular wherein in the tyre deterioration of wet performance due to tread wear is small and the tread wear can be checked immediately.

The object is solved by a method having the features of claim 1. Sub-claims are directed to preferable embodiments of the invention.

According to an embodiment of the invention, the second reference internal pressure is equal to or less than 120% of the first reference internal pressure.

According to an embodiment of the invention, the tread portion further comprises a third rubber layer made of a base rubber that is disposed inwardly in the tyre radial direction of the second rubber layer, wherein the base rubber has a loss tangent tanδb smaller than the loss tangent tanδ1.

According to an embodiment of the invention, a distance in the tyre radial direction from the ground contact surface to the outer surface of the first indicator is in a range from 90% to 110% of a distance in the tyre radial direction from the ground contact surface to the first wear line.

According to an embodiment of the invention, the tread portion further comprises a tread edge and a buttress surface extending outwardly in a tyre axial direction from the tread edge, wherein the buttress surface is provided with a mark indicating the presence of the first indicator at a same position in a tyre circumferential direction as the first indicator.

According to an embodiment of the invention, the groove portion is a circumferential groove that extends continuously in a tyre circumferential direction.

According to an embodiment of the invention, the groove portion is a sipe having an opening width equal to or less than 1.5 mm at the ground contact surface.

According to an embodiment of the invention, the groove portion further comprises a second indicator in which a bottom of the groove portion locally raises, wherein the second indicator has an outer surface in the tyre radial direction, and wherein the radially outer surface of the second indicator substantially coincides with a second wear line that is a wear limit of the tread portion.

### BRIEF DESCRIPTION OF THE DRAWINGS

FIG. 1 is a tyre meridian cross-sectional view of one embodiment of the tyre according to the present invention;
FIG. 2 is a partial enlarged view of the tread portion of FIG. 1;
FIG. 3 is a partial enlarged perspective view of a first indicator of FIG. 2;
FIG. 4 is an enlarged plan view of the first indicator when the tyre is new; and
FIG. 5 is an enlarged plan view of the first indicator when the tread portion is worn out.

### DETAILED DESCRIPTRION OF THE INVENTION

One or more embodiments of the present invention will be described below with reference to the drawings.

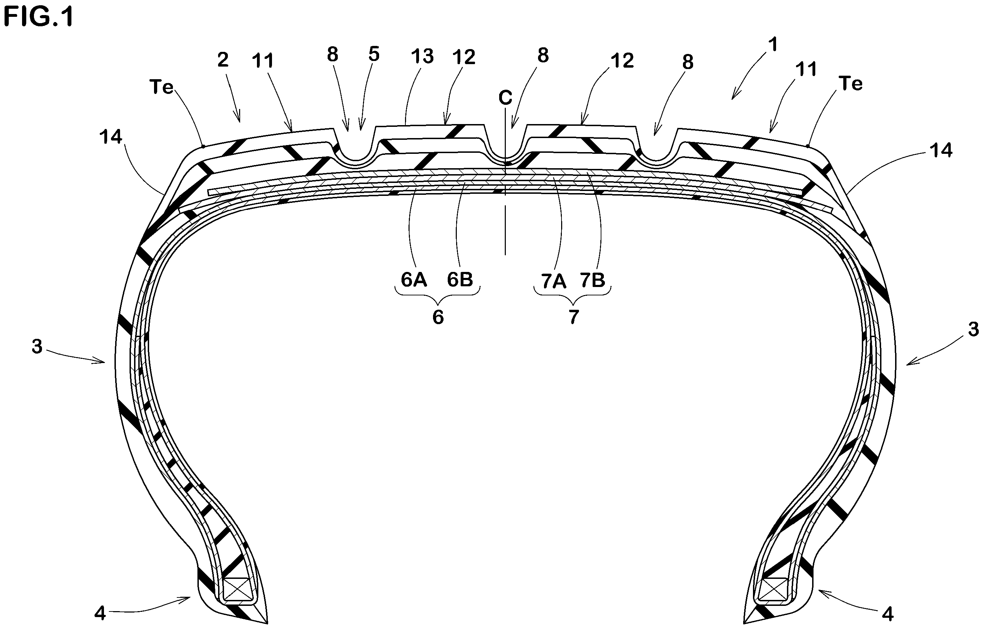

FIG. 1 is a tyre meridian cross-sectional view of one embodiment of the tyre 1 under a normal state according to the present invention. As illustrated in FIG. 1, the present invention is preferably applied, for example, to a pneumatic tyre for passenger car. However, the present invention is not limited to such an aspect, but may be applied to a heavy-duty tyre, for example.

As used herein, when a tyre is a pneumatic tyre based on a standard, the "normal state" is such that the tyre 1 is mounted onto a standard wheel rim with a standard pressure but loaded with no tyre load. If a tyre is not based on the standards, the normal state is a standard state of use according to the purpose of use of the tyre and means a state of no load. As used herein, unless otherwise noted, dimensions of portions of the tyre are values measured under the normal state.

As used herein, the "standard wheel rim" is a wheel rim officially approved for each tyre by standards organizations on which the tyre is based, wherein the standard wheel rim is the "standard rim" specified in JATMA, the "Design Rim" in TRA, and the "Measuring Rim" in ETRTO, for example.

As used herein, the "standard pressure" is a standard pressure officially approved for each tyre by standards organizations on which the tyre is based, wherein the standard pressure is the "maximum air pressure" in JATMA, the maximum pressure given in the "Tire Load Limits at Various Cold Inflation Pressures" table in TRA, and the "Inflation Pressure" in ETRTO, for example.

The tyre 1 according to the present embodiment of the invention includes tyre components, such as a carcass 6 and a tread reinforcing cord layer 7, therein. For these tyre components, well known components may be adopted as appropriate.

The carcass 6 extends from one of bead portions 4 to the other one of the bead portions 4, through a pair of sidewall portions 3 and a tread portion 2. In the present embodiment of the invention, the carcass 6, for example, is composed of two carcass plies 6A and 6B. The carcass plies 6A and 6B, for example, include carcass cords made of an organic fiber oriented at an angle of from 75 to 90 degrees with respect to the tyre circumferential direction.

The tread reinforcing layer 7, for example, includes two reinforcing plies 7A and 7B. The reinforcing plies 7A and 7B, for example, each include a plurality of cords covered with a topping rubber. The cords, for example, are oriented at an angle of from 10 to 45 degrees with respect to the tyre circumferential direction. As the cords, various organic fiber cords or steel cords may be used as appropriate, for example.

The tread portion 2 includes a ground contact surface 13 and a pair of buttress surfaces 14. The ground contact surface 13 is the area that is in contact with the ground during normal driving. The buttress surfaces 14 are the outer surfaces located outwardly in the tyre axial direction of the ground contact surface 13. The boundaries between the ground contact surface 13 and the respective buttress surfaces 14 are the tread edges Te.

As used herein, the tread edges Te are the axial outermost edges of the ground contact surface 13 of the tyre 1 which occurs under the condition such that the tyre 1 under the normal state is grounded on a plane with 75% of the standard tyre load by zero camber angles.

As used herein, when a tyre is a pneumatic tyre based on a standard, the "standard tyre load" is a tyre load officially approved for each tyre by the standards organization in which the tyre is based, wherein the standard tyre load is the "maximum load capacity" in JATMA, the maximum value given in the above-mentioned table in TRA, and the "Load Capacity" in ETRTO, for example. If a tyre for which no standards is specified, the "standard tyre load" is the maximum load that can be applied to the tyre according to the above-mentioned standards.

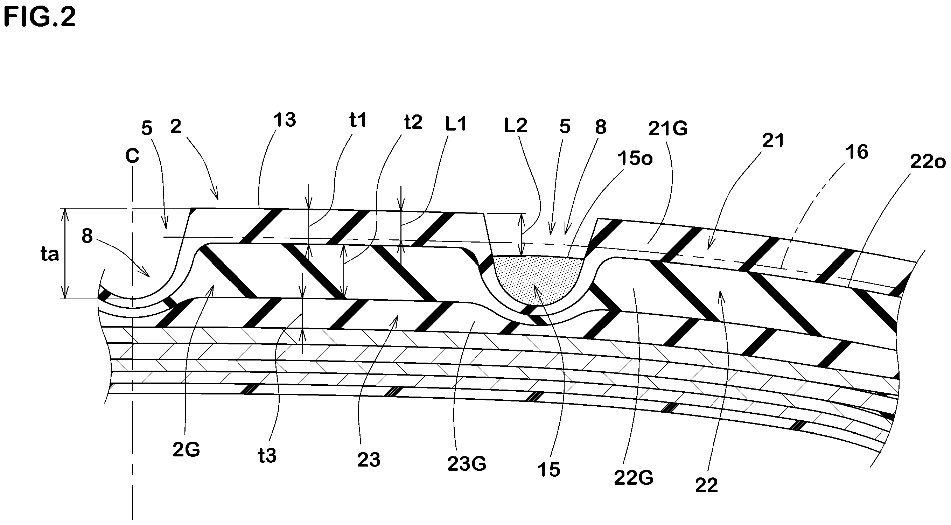

FIG. 2 illustrates a partial enlarged cross-sectional view of the tread portion 2. As illustrated in FIG. 2, the tread portion 2 includes a first rubber layer 21 and a second rubber layer 22. The first rubber layer 21 is made of a first cap rubber 21G and forms at least a part of the ground contact surface 13. In the present embodiment of the invention, the first rubber layer 21 also forms a pair of buttress surfaces 14 (shown in FIG. 1). The second rubber layer 22 is made of a second cap rubber 22G and is arranged inwardly in the tyre radial direction of the first rubber layer 21. The second rubber layer 22 is in direct contact with the first rubber layer 21.

In general, rubber with a large loss tangent is known to exert a large frictional force on wet road surfaces. Based on such technical matters, in the present invention, a loss tangent tanδ2 of the second cap rubber 22G is greater than a loss tangent tanδ1 of the first cap rubber 21G. As used herein, a loss tangent tanδ is a value measured using a dynamic viscoelasticity measuring device (Xplexer series) manufactured by GABO under the following conditions in accordance with the provisions of JIS-K6394.
Initial strain: 5%
Amplitude of dynamic strain: plus/minus 1%
Frequency: 10Hz
Deformation Mode: Stretch
Measurement temperature: 30 degrees C

The tread portion 2 further includes at least one groove portion 5 opening to the ground contact surface 13. The groove portion 5 means a cut regardless of the opening width or depth, such as a normal groove provided to improve drainage, a sipe with an opening width of 1.5 mm or less on the outer surface of the tyre, and a recess recessed from the ground contact surface 13 locally. The tread portion 2 according to the present embodiment of the invention is provided with a plurality of circumferential grooves 8 extending continuously in the tyre circumferential direction as the groove portion 5. In addition to the circumferential grooves, the tread portion 2 is preferably provided with one or more lateral grooves extending in the tyre axial direction (not illustrated).

As illustrated in FIG. 1, the tread portion 2 includes first land portions 11 and second land portions 12 sectioned by the above-mentioned circumferential grooves 8. The second land portions 12 are arranged closer to the tyre equator C than the first land portions 11. In the present embodiment of the invention, the tread portion 2 is configured to includes two second land portions 12 arranged closer to the tyre equator C and two first land portions 11 arranged to sandwich them. As a result, the tyre 1 according to the present embodiment of the invention is configured as a so-called 4-rib tyre. However, the tyre 1 according to the present invention is not limited to such a configuration, and the tread portion 2 may be configured as a so-called 5-rib tyre in which the tread portion 2 is divided into five land portions by four circumferential grooves 8, for example.

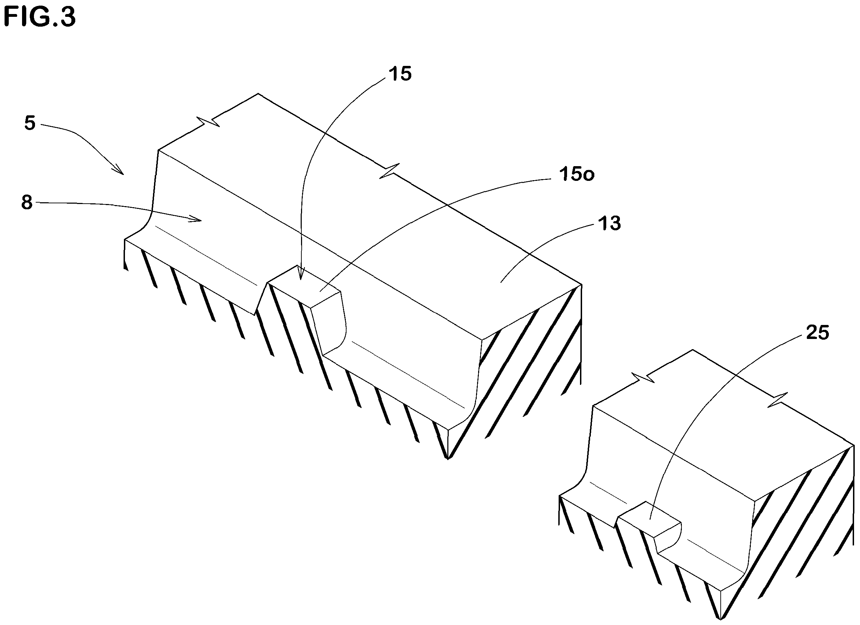

FIG.3 shows an enlarged perspective view of one of the circumferential grooves 8 as an example of the groove portion 5. As illustrated in FIG. 3, the groove portion 5 includes a first indicator 15 in which a bottom of the groove portion locally raises. Note that in FIG. 3, the boundary between the above-mentioned rubber layers is omitted. The first indicator 15 has a larger height in the tyre radial direction than conventional indicators that indicate the wear limit of the tread portion 2 (hereinafter, may be referred to as "second indicator"). The groove portion 5 according to the present embodiment of the invention also includes the second indicator 25 (shown in FIG. 3). The second indicator 25, like the first indicator 15, is a portion in which a bottom of the groove portion 5 locally raises. For example, the second indicator 25 may be configured as a "slip sign" having a height of 1.6 mm from the groove bottoms of the circumferential grooves 8.

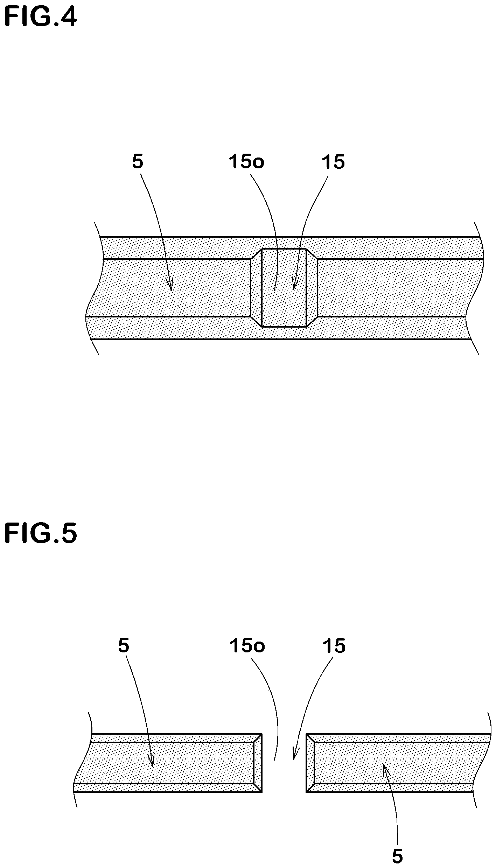

FIG. 4 shows an enlarged plan view of the first indicator 15 when the tyre is new, and FIG. 5 shows an enlarged plan view of the first indicator 15 when a radially outer part of the tread tubber is worn out. In FIG. 4 and FIG. 5, the openings of the groove portion 5 is indicated by dots. As illustrated in FIGS. 4 and 5, when the tread portion 2 wears, the outer surface 15o of the first indicator 15 appears on a worn ground contact surface to be continuous to the worn ground contact surface. Thus, the first indicator 15 makes it possible to check whether the tread portion 2 has worn out beyond a certain amount.

As illustrated in FIG. 2, in the present invention, when the tyre 1 is new, the radially outer surface 15o of the first indicator 15 (dotted in FIG. 2 for ease of understanding) is parallel to the ground contact surface 13 and substantially coincides with a first wear line 16 that passes through a radially outer surface of the second rubber layer 22. Note that the first wear line 16 overlaps the outer surface of the second rubber layer 22, but in FIG. 2 the first wear line 16 is shown as a two-pointed line passing slightly above the outer surface 22o in the tyre radial direction of the second rubber layer 22. By adopting the above configuration, the tyre 1 according to the present invention has little deterioration in wet performance due to wear of the tread portion 2, and wear of the tread portion 2 can be checked immediately. The reason is that when the wear of the tread portion 2 progresses, the second rubber layer 22, which can be expected to have high wet grip, is exposed and suppresses the deterioration of wet performance. Also, the wear can be checked by the appearance of the outer surface 15o of the first indicator 15 in the tyre radial direction on the ground contact surface 13 (shown in FIG. 5).

On the other hand, with conventional tyres, as tread wear progresses, a worn ground contact surface 13 tends to become flat, and wet performance (especially hydroplaning resistance performance) tends to decrease. In order to deal with such problems, the tyre 1 according to the present invention has the above-described configuration, so that the above-described tendency can be alleviated by the following method of using the tyre 1. The inventive method of using the tyre 1 includes running the tyre 1 under a first standard internal pressure until the first indicator 15 appears on a worn ground contact surface, and running the tyre 1 under a second reference internal pressure greater than the first reference internal pressure after the outer surface 15o of the first indicator 15 appears on the worn ground contact surface.

In such a method of using the tyre 1 of the present invention, when the wear of the tread portion 2 progresses and the ground contact surface becomes flat, the internal pressure of the tyre 1 can be increased to bring the ground contact surface 13 to an appropriate round shape, thus maintaining the hydroplaning resistance performance. In this method, the first standard internal pressure is the internal pressure that is applied to the tyre 1 under the normal state of use, for example, the standard pressure mentioned above is adopted. In order to maintain the balance of various performances of the tyre, the second standard internal pressure is preferably equal to or less than 120% of the first standard internal pressure.

In order to make it easier for users of the tyre 1 to identify the position of the first indicator 15, at least one of the buttress surfaces 14 preferably includes a mark indicating the presence of the first indicator 15 at the same position in the tyre circumferential direction as the first indicator 15.

Hereinafter, a more detailed configuration of the present embodiment of the invention will be described. Note that each configuration described below shows a specific aspect of the present embodiment of the invention. Thus, the present invention can exert the above-mentioned effects even if the tyre does not include the configuration described below. Further, if any one of the configurations described below is applied independently to the tyre of the present invention having the above-mentioned characteristics, the performance improvement according to each additional configuration can be expected. Furthermore, when some of the configurations described below are applied in combination, it is expected that the performance of the additional configurations will be improved.

As illustrated in FIG. 2, "the radially outer surface 15o of the first indicator 15 substantially coincides with the first wear line 16" shall include, at a minimum, an aspect where a tyre radial distance L2 from the ground contact surface 13 to the outer surface 15o of the first indicator 15 is 90% to 110% of a tyre radial distance L1 from the ground contact surface 13 to the first wear line 16. In FIG. 2, the above distances L1 and L2 are shown slightly differently, but in some preferred embodiments of the invention they are identical with each other.

The first cap rubber 21G has a loss tangent tanδ1 preferably equal to or more than 0.13, more preferably equal to or more than 0.15, still further preferably equal to or more than 0.18, but preferably equal to or less than 0.29, more preferably equal to or less than 0.25, still further preferably equal to or less than 0.22. Such a first cap rubber 21G, at the beginning of use, can exert well-balanced steering stability on dry roads (hereinafter simply referred to as "steering stability") and wet performance.

To improve steering stability and wet performance when the tread portion 2 wears, the loss tangent tanδ2 of the second cap rubber 22G is preferably equal to or more than 0.20, more preferably equal to or more than 0.25, still further preferably equal to or more than 0.28, but preferably equal to or less than 0.40, more preferably equal to or less than 0.35, still further preferably equal to or less than 0.32.

In some preferred embodiments of the invention, the tread portion 2 may further include a third rubber layer 23 made of a base rubber 23G that is disposed inwardly in the tyre radial direction of the second rubber layer 22. Preferably, the base rubber 23G has a loss tangent tanδb smaller than the loss tangent tanδ1. Specifically, the loss tangent tanδb is equal to or less than 0.12. The third rubber layer 23, which consists of the base rubber 23G, can help to suppress excessive heat generation in the tread portion 2.

The tread rubber 2G according to the present embodiment of the invention consists of only the first rubber layer 21, the second rubber layer 22 and the third rubber layer 23 described above at least in the area that constitutes the ground contact surface 13, and no rubber layers other than these are provided. However, the present invention is not limited to such an embodiment of the invention, and other rubber layers may be arranged as appropriate. The first rubber layer 21, the second rubber layer 22 and the third rubber layer 23 according to the present embodiment of the invention extend to have a substantially constant thickness on the inner side of the ground contact surface 13 in the tyre radial direction except around the circumferential grooves 8.

In the present embodiment of the invention, a thickness t1 of the first rubber layer 21 is preferably in a range from 30% to 70%, more preferably from 40% to 60%, of an effective tread thickness ta. As a result, when the wear of the tread portion 2 progresses moderately, the second cap rubber 22G, which can be expected to have high wet grip, is exposed, and wet performance can be effectively maintained. Note that the effective tread thickness ta means the thickness of the tread rubber 2G from the ground contact surface 13 to the bottom of the groove portion 5 (e.g., the circumferential groove 8).

From the viewpoint of reliably maintaining wet performance, it is preferable that the second rubber layer 22 constitutes the ground contact surface 13 even when the tread rubber 2G is worn out to the limit. In other words, when the tread portion 2 wears beyond the second wear line, which is the wear limit, and the radially outer surface of the second indicator 25 appears on a worn ground contact surface, the second rubber layer 22 preferably constitutes the worn ground contact surface. In some more preferred embodiments of the invention, the inner surface of the second rubber layer 22 in the tyre radial direction is located inwardly in the tyre radial direction of the groove bottoms of the circumferential grooves 8. Thus, wet performance can be maintained for sure.

A thickness t2 of the second rubber layer 22 is preferably in a range from 50% to 70% of the effective tread thickness ta. This makes it possible to obtain the above effects while maintaining the durability of the tread portion 2.

A thickness t3 of the third rubber layer 23 is determined variously so that the first rubber layer 21 and the second rubber layer 22 can have the configuration described above. Preferably, the thickness t3 is in a range from 10% to 30% of the effective tread thickness ta. As a result, it is possible to improve fuel efficiency performance while exhibiting the above-mentioned effects.

While the particularly preferable embodiments of the tyre in accordance with the present invention have been described in detail, the present invention is not limited to the illustrated embodiments, but can be modified and carried out in various aspects within the scope of the appended claims.

## Claims

1. A method of using a tyre (1), the tyre (1) comprising:
a tread portion (2), wherein
the tread portion (2) comprises
a ground contact surface (13),
a first rubber layer made (21) of a first cap rubber (21G) that forms at least a part of the ground contact surface,
a second rubber layer made (22) of a second cap rubber (22G) that is disposed radially inwardly of the first rubber layer (21), and
at least one groove portion (5) opening to the ground contact surface,
the first cap rubber (21G) has a loss tangent tanδ1,
the second cap rubber (22G) has a loss tangent tanδ2 greater than the loss tangent tanδ1,
wherein the loss tangent is a value measured using a dynamic viscoelasticity measuring device under the conditions of 5% initial strain, +/- 1% amplitude of dynamic strain, a frequency of 10 Hz, stretch deformation mode and a measurement temperature of 30°C,
the groove portion (5) comprises a first indicator (15) in which a bottom of the groove portion locally raises, the first indicator (15) having an outer surface (15o) in a tyre radial direction, and
the radially outer surface (15o) of the first indicator (15) substantially coincides with a first wear line (16) that is parallel to the ground contact surface (13) and passes through a radially outer surface (22o) of the second rubber layer (22),
wherein the method comprises running the tyre (1) under a first reference internal pressure,
**characterized in that**
the method comprising:
running the tyre (1) under a first reference internal pressure until the first indicator (15) appears on a worn ground contact surface (13); and
running the tyre (1) under a second reference internal pressure greater than the first reference internal pressure after the outer surface (15o) of the first indicator (15) appears on the worn ground contact surface (13).

2. The method according to claim 1, wherein
the second reference internal pressure is equal to or less than 120% of the first reference internal pressure.

3. The method according to claim 1 or 2, wherein
the tread portion (2) further comprises a third rubber layer (23) made of a base rubber (23G) that is disposed inwardly in the tyre radial direction of the second rubber layer (22), wherein
the base rubber (23G) has a loss tangent tanδb smaller than the loss tangent tanδ1.

4. The method according to any one of claims 1 to 3, wherein
a distance (L2) in the tyre radial direction from the ground contact surface (13) to the outer surface (15o) of the first indicator (15) is in a range from 90% to 110% of a distance (L1) in the tyre radial direction from the ground contact surface (13) to the first wear line (16).

5. The method according to any one of claims 1 to 4, wherein
the tread portion (2) further comprises a tread edge (Te) and a buttress surface (14) extending outwardly in a tyre axial direction from the tread edge (Te), wherein
the buttress surface (14) is provided with a mark indicating the presence of the first indicator (15) at a same position in a tyre circumferential direction as the first indicator (15).

6. The method according to any one of claims 1 to 5, wherein
the groove portion (5) is a circumferential groove that extends continuously in a tyre circumferential direction.

7. The method according to any one of claims 1 to 6, wherein
the groove portion (5) is a sipe having an opening width equal to or less than 1.5 mm at the ground contact surface (13).

8. The method according to any one of claims 1 to 7, wherein
the groove portion (5) further comprises a second indicator (25) in which a bottom of the groove portion locally raises, wherein the second indicator (25) has an outer surface (25o) in the tyre radial direction, and wherein
the radially outer surface of the second indicator (25o) substantially coincides with a second wear line that is a wear limit of the tread portion (2).

## Patentansprüche

1. Verfahren zur Verwendung eines Reifens (1), wobei der Reifen (1) umfasst:
einen Laufflächenabschnitt (2), wobei
der Laufflächenabschnitt (2) umfasst:
eine Bodenkontaktfläche (13),
eine erste Gummischicht (21), die aus einem ersten Deckgummi (21G) hergestellt ist, die zumindest einen Teil der Bodenkontaktfläche bildet,
eine zweite Gummischicht (22), die aus einem zweiten Deckgummi (22G) hergestellt ist, die radial innen von der ersten Gummischicht (21) angeordnet ist, und
zumindest einen Rillenabschnitt (5), der sich zu der Bodenkontaktfläche öffnet,
wobei der erste Deckgummi (21G) einen Verlusttangens tanδ1 aufweist,
wobei der zweite Deckgummi (22G) einen Verlusttangens tanδ2 aufweist, der größer als der Verlusttangens tanδ1 ist, wobei der Verlusttangens ein Wert ist, der unter Verwendung einer Messvorrichtung für die dynamische Viskoelastizität unter den Bedingungen von 5% Anfangsdehnung, +/-1% Amplitude der dynamischen Dehnung, einer Frequenz von 10 Hz, einem Dehnungsverformungsmodus und einer Messtemperatur von 30°C gemessen wird,
der Rillenabschnitt (5) einen ersten Indikator (15) umfasst, in dem sich ein Boden des Rillenabschnitts lokal erhöht, wobei der erste Indikator (15) eine äußere Fläche (15o) in einer Reifenradialrichtung aufweist, und
die radial äußere Fläche (15o) des ersten Indikators (15) im Wesentlichen mit einer ersten Verschleißlinie (16) zusammenfällt, die parallel zu der Bodenkontaktfläche (13) ist und durch eine radial äußere Fläche (22o) der zweiten Gummischicht (22) verläuft,
wobei das Verfahren das Betreiben des Reifens (1) unter einem ersten Referenzinnendruck umfasst,
**dadurch gekennzeichnet, dass**
das Verfahren umfasst:
Betreiben des Reifens (1) unter einem ersten Referenzinnendruck, bis der erste Indikator (15) auf einer verschlissenen Bodenkontaktfläche (13) erscheint; und
Betreiben des Reifens (1) unter einem zweiten Referenzinnendruck, der größer als der erste Referenzinnendruck ist, nachdem die Außenfläche (15o) des ersten Indikators (15) auf der verschlissenen Bodenkontaktfläche (13) erscheint.

2. Verfahren nach Anspruch 1, wobei
der zweite Referenzinnendruck gleich oder kleiner als 120 % des ersten Referenzinnendrucks ist.

3. Verfahren nach Anspruch 1 oder 2, wobei
der Laufflächenabschnitt (2) ferner eine dritte Gummischicht (23) umfasst, die aus einem Basisgummi (23G) hergestellt ist und die in der Reifenradialrichtung innen von der zweiten Gummischicht (22) angeordnet ist, wobei
der Basisgummi (23G) einen Verlusttangens tanöb aufweist, der kleiner als der Verlusttangens tanδ1 ist.

4. Verfahren nach einem der Ansprüche 1 bis 3, wobei ein Abstand (L2) in der Reifenradialrichtung von der Bodenkontaktfläche (13) zu der Außenfläche (15o) des ersten Indikators (15) in einem Bereich von 90 % bis 110 % eines Abstands (L1) in der Reifenradialrichtung von der Bodenkontaktfläche (13) zu der ersten Verschleißlinie (16) liegt.

5. Verfahren nach einem der Ansprüche 1 bis 4, wobei
der Laufflächenabschnitt (2) ferner eine Laufflächenkante (Te) und eine Versteifungsfläche (14) umfasst, die sich in einer Reifenaxialrichtung von der Laufflächenkante (Te) nach außen erstreckt, wobei
die Versteifungsfläche (14) mit einer Markierung versehen ist, die das Vorhandensein des ersten Indikators (15) an einer gleichen Position in einer Reifenumfangsrichtung wie der erste Indikator (15) anzeigt.

6. Verfahren nach einem der Ansprüche 1 bis 5, wobei der Rillenabschnitt (5) eine Umfangsrille ist, die sich kontinuierlich in einer Reifenumfangsrichtung erstreckt.

7. Verfahren nach einem der Ansprüche 1 bis 6, wobei der Rillenabschnitt (5) ein Feineinschnitt ist, der eine Öffnungsbreite gleich oder kleiner als 1,5 mm an der Bodenkontaktfläche (13) aufweist.

8. Verfahren nach einem der Ansprüche 1 bis 7, wobei
der Rillenabschnitt (5) ferner einen zweiten Indikator (25) umfasst, in dem sich ein Boden des Rillenabschnitts lokal erhöht, wobei der zweite Indikator (25) eine äußere Fläche (25o) in der Reifenradialrichtung aufweist, und wobei
die radial äußere Fläche des zweiten Indikators (25o) im Wesentlichen mit einer zweiten Verschleißlinie zusammenfällt, die eine Verschleißgrenze des Laufflächenabschnitts (2) ist.

## Revendications

1. Procédé d'utilisation d'un pneumatique (1), le pneumatique (1) comprenant :
une portion formant bande de roulement (2), dans lequel
la portion formant bande de roulement (2) comprend
une surface de contact au sol (13),
une première couche de caoutchouc (21) faite d'un premier caoutchouc de chape (21G) qui forme au moins une partie de la surface de contact au sol,
une deuxième couche de caoutchouc (22) faite d'un deuxième caoutchouc de chape (22G) qui est disposée radialement à l'intérieur de la première couche de caoutchouc (21), et
au moins une portion de rainure (5) s'ouvrant sur la surface de contact au sol,
le premier caoutchouc de chape (21G) a une tangente de perte tanδ1,
le deuxième caoutchouc de chape (22G) a une tangente de perte tanδ2 supérieure à la tangente de perte tanδ1,
dans lequel la tangente de perte est une valeur mesurée à l'aide d'un dispositif de mesurage de viscoélasticité dynamique sous les conditions suivantes : contrainte initiale de 5 %, amplitude de contrainte dynamique de ±1 %, fréquence de 10 Hz, mode de déformation en étirement, et température de mesurage de 30 °C,
la portion de rainure (5) comprend un premier indicateur (15) dans lequel fond de la portion de rainure s'élève localement, le premier indicateur (15) ayant une surface extérieure (15o) dans une direction radiale du pneumatique, et
la surface radialement extérieure (15o) du premier indicateur (15) coïncide sensiblement avec une première ligne d'usure (16) qui est parallèle à la surface de contact au sol (13) et qui passe à travers une surface radialement extérieure (22o) de la deuxième couche de caoutchouc (22),
dans lequel le procédé comprend une étape consistant à faire rouler le pneumatique (1) sous une première pression interne de référence,
**caractérisé en ce que** le procédé comprend les étapes consistant à :
faire rouler le pneumatique (1) sous une première pression interne de référence jusqu'à ce que le premier indicateur (15) apparaisse sur une surface de contact au sol usée (13) ; et
faire rouler le pneumatique (1) sous une seconde pression interne de référence supérieure à la première pression interne de référence après que la surface extérieure (15o) du premier indicateur (15) apparaît sur la surface de contact au sol usée (13).

2. Procédé selon la revendication 1, dans lequel
la seconde pression interne de référence est égale ou inférieure à 120 % de la première pression interne de référence.

3. Procédé selon la revendication 1 ou 2, dans lequel
la portion formant bande de roulement (2) comprend en outre une troisième couche de caoutchouc (23) faite d'un caoutchouc de base (23G) qui est disposée à l'intérieur dans la direction radiale du pneumatique de la deuxième couche de caoutchouc (22), dans lequel
le caoutchouc de base (23G) a une tangente de perte tanδb inférieure à la tangente de perte tanδ1.

4. Procédé selon l'une quelconque des revendications 1 à 3, dans lequel une distance (L2) dans la direction radiale du pneumatique depuis la surface de contact au sol (13) jusqu'à la surface extérieure (15o) du premier indicateur (15) est dans une plage allant de 90 % à 110 % d'une distance (L1) dans la direction radiale du pneumatique depuis la surface de contact au sol (13) jusqu'à la première ligne d'usure (16).

5. Procédé selon l'une quelconque des revendications 1 à 4, dans lequel
la portion formant bande de roulement (2) comprend en outre un bord de bande de roulement (Te) et une surface de contrefort (14) s'étendant vers l'extérieur dans une direction axiale du pneumatique depuis le bord de bande de roulement (Te), dans lequel
la surface de contrefort (14) est dotée d'un marquage indiquant la présence du premier indicateur (15) a une même position dans une direction circonférentielle du pneumatique que le premier indicateur (15).

6. Procédé selon l'une quelconque des revendications 1 à 5, dans lequel la portion de rainure (5) est une rainure circonférentielle qui s'étend en continu dans une direction circonférentielle du pneumatique.

7. Procédé selon l'une quelconque des revendications 1 à 6, dans lequel la portion de rainure (5) est une fente ayant une largeur d'ouverture égale ou inférieure à 1,5 mm au niveau de la surface de contact au sol (13).

8. Procédé selon l'une quelconque des revendications 1 à 7, dans lequel
la portion de rainure (5) comprend en outre un second indicateur (25) dans lequel un fond de la portion de rainure s'élève localement, le second indicateur (25) ayant une surface extérieure (25o) dans la direction radiale du pneumatique, et dans lequel
la surface radialement extérieure du second indicateur (25o) coïncide sensiblement avec une seconde ligne d'usure qui est une limite d'usure de la portion formant bande de roulement (2).
